# EUROPÄISCHE PATENTSCHRIFT

(11) **EP 1 263 806 B1**
(45) Veröffentlichungstag und Bekanntmachung des Hinweises auf die Patenterteilung: **28.02.2007**
(21) Anmeldenummer: 01907471.5
(22) Anmeldetag: 19.01.2001
(51) Int. Cl.: C08F 8/30, C08F 8/34

(54) **ALKALISTABILE BESCHICHTUNG AUF TRÄGERMATERIALIEN**
ALKALI-STABLE COATING ON SUPPORT MATERIALS
REVETEMENT STABLE AUX ALCALINS, SUR DES MATERIAUX SUPPORTS

(30) Priorität: 02.02.2000 DE 10004565
(43) Veröffentlichungstag der Anmeldung: 11.12.2002
(73) Patentinhaber: Merck Patent GmbH, 64293 Darmstadt (DE)
(72) Erfinder: MÜLLER, Egbert, 64291 Darmstadt (DE); SEILER, Anja, 64846 Gro -Zimmern (DE); POGUNTKE, Peter, 64823 Gro -Umstadt (DE)
(86) Internationale Anmeldenummer: PCT/EP2001/000606
(87) Internationale Veröffentlichungsnummer: WO 2001/057098

(56) Entgegenhaltungen:
- EP-A- 0 305 749
- EP-A- 0 480 069
- EP-A- 0 561 722
- EP-A- 0 757 060
- WO-A-96/26223
- US-A- 5 866 673

## Beschreibung

Die Erfindung betrifft Trägermaterialien mit einer alkalistabilen ionischen Beschichtung und ein Verfahren zu ihrer Herstellung.

Chromatographische Trennmaterialien bzw. Sorbentien, die zur Auftrennung oder Reinigung von Biopolymeren eingesetzt werden, müssen neben guten Trenneigenschaften eine hohe Alkalistabilität aufweisen. Grund dafür sind insbesondere spezielle Reinigungs- und Sterilisationsverfahren, denen die Sorbentien unterworfen werden.

Beispielsweise wird bei dem sogenannten clean in place Verfahren das Trennmaterial in Abhängigkeit von der Säulendimension über einen Zeitraum von 10 Minuten bis zu drei Stunden mit 1 M Natronlauge behandelt. Um eine Verkeimung zu verhindern, werden die Trennmaterialien für eine Langzeitlagerung in 0,1 M Natronlauge aufbewahrt. Nicht alle Trägermaterialien, die zur Auftrennung von Biopolymeren eingesetzt werden, sind unter derartigen Bedingungen stabil.

Trägermaterialien für die Biochromatographie sind beispielsweise natürliche Polymere, wie Dextran, Agarose oder Cellulose, Kieselgel oder synthetische Polymere, wie Polystyrol und Methacrylatester. Um funktionalisierte Trägermaterialien für die lonenaustausch-, hydrophobe Interaktions- oder Affinitätschromatographie herzustellen, müssen die genannten Basismaterialien chemisch modifiziert werden. Dies kann auf zwei verschiedene Arten erfolgen:
1) polymeranaloge Umsetzungen mit niedermolekularen Komponenten
2) Pfropf- und Blockpolymerisationen
Bei einer nicht-polymeren Beschichtung erfolgt die Derivatisierung des Basismaterials häufig über Etherbindungen oder sekundäre Amine. Derartige Bindungen sind alkalistabil. Nichtpolymere Beschichtungen haben jedoch den Nachteil einer geringen Proteinbindungskapazität.

Aus diesem Grund sind polymere Oberflächenbeschichtungen zu bevorzugen. In EP 0 337 144 werden Beschichtungen von Methacrylatgelen mit ionischen Polyamiden beschrieben. Bekanntermaßen sind jedoch Methacrylate alkalilabil.

In WO 96/22316 bzw. WO 97/49754 wird die Beschichtung von Derivaten des alkalistabilen Basismaterials Polyamid 6 mit Methacrylatestern beschrieben, die durch polymeranaloge Umsetzungen anschließend weiter zu ionischen Derivaten modifiziert werden. Aber auch diese Materialien besitzen aufgrund der Methacrylatbeschichtung nur eine begrenzte Alkalistabilität.

Aufgabe der vorliegenden Erfindung war es daher, für die Biochromatographie geeignete funktionalisierte Sorbentien zur Verfügung zu stellen, die sowohl eine hohe Alkalistabilität als auch eine hohe Bindekapazität aufweisen.

Es wurde gefunden, daß bei der Beschichtung von Derivaten des alkalistabilen Basismaterials Polyamid 6 mit Methacrylatestern und anschließender polymeranaloger Umsetzung zu ionischen Derivaten die Basenstabilität stark erhöht werden kann, wenn die polymeranaloge Umsetzung nicht nur mit Separationseffektoren, wie z.B. Diethylamin, sondern nachfolgend zusätzlich mit Ethanolamin durchgeführt wird. Die so erhältlichen Trennmaterialien zeigen neben einer guten Bindekapazität auch eine sehr gute Stabilität gegenüber Alkalibehandlung.

Trotz der bislang als basenlabil einzustufenden Beschichtung aus Methacrylatestern ist das erfindungsgemäß nachbehandelte Material wesentlich stabiler als beispielsweise Materialien aus Glycidylmethacrylat/Ethylenglycoldimethacrylat, die mit dem basenstabileren Polyacrylamido-(N,N'-diethylaminoethylendiamin) beschichtet sind.

Gegenstand der Erfindung sind daher alkalistabile Sorbentien, die hergestellt werden durch Umsetzung eines Formkörpers, der reaktive Gruppen der Formel I aufweist, mit einer Verbindung der Formel II.

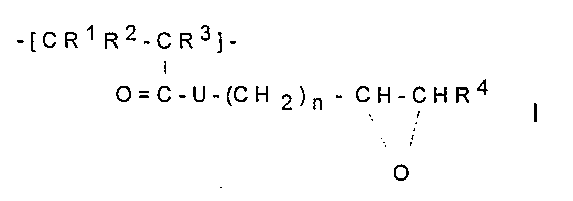

In Formel bedeuten:
- R¹,R² und R³: unabhängig voneinander
H oder CH₃,
- R⁴: H, Alkyl mit 1-5 C-Atomen oder Aryl mit 6-12 C-Atomen,
- U: -O- oder -NH-
und
- n: eine ganze Zahl zwischen 1 und 5.

A-(CH₂)ₘ-B II

In Formel II bedeuten
- A: NHR⁵,
- B: H, OH, SH oder NHR⁵ mit
- R⁵: H, Alkyl mit 1-5 C-Atomen, bevorzugt H, Methyl oder Ethyl
und
- m: eine ganze Zahl zwischen 1 und 6, bevorzugt 2 und 3.

In einer bevorzugten Ausführungsform weist das Sorbens reaktive Gruppen der Formel I auf, in denen
- R¹ und R²: H,
- R³: CH₃,
- R⁴: H,
- U: -O-
und
- n: 1
bedeuten. Diese Gruppen entstehen vorzugsweise durch Block- oder Pfropfpolymerisation von Glycidylmethacrylat auf ein Basispolymer.

In einer bevorzugten Ausführungsform wird Ethanolamin als Verbindung der Formel II verwendet.

In einer bevorzugten Ausführungsform besteht das Sorbens aus einem Basispolymer aus Polyamid, Polyvinylalkohol oder Copolymeren aus (Meth)acrylatderivaten und Comonomeren mit aliphatischen Hydroxylgruppen.

In einer bevorzugten Ausführungsform weist das Sorbens zusätzlich Gruppen der Formel III auf, die Separationseffektoren tragen.
- R⁹: Alkyl mit 1-5 C-Atomen.

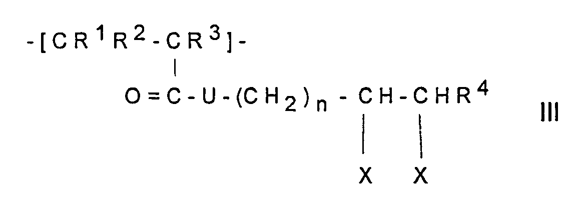

In Formel III bedeuten:
- R¹,R² und R³: unabhängig voneinander
H oder CH₃,
- R⁴: H, Alkyl mit 1-5 C-Atomen oder Aryl mit 6-12 C-Atomen,
- U: -O- oder -NH-
- n: eine ganzen Zahl zwischen 1 und 5,
ein Rest X einen Separationseffektor, sowie der andere Rest X OH.

Der Separationseffektor kann insbesondere eine der folgenden Bedeutungen aufweisen:
a) eine ionische Gruppe, ausgewählt aus -NR⁷R⁸ oder -N+R⁷R⁸R⁹,
   worin
   - R⁷ und R⁸: unabhängig voneinander
   H, Alkyl mit 1-5 C-Atomen
   und
   - R⁹: Alkyl mit 1-5 C-Atomen
   mit der Maßgabe, daß wenn X = -N+R⁷R⁸R⁹, R⁷ und R⁸ nicht H sein können,
b) eine hydrophobe Gruppierung -OR¹⁰ oder -NHR¹⁰, wobei R¹⁰ C₁-C₂₀-Alkyl, C₆-C₂₅-Aryl, C₇-C₂₅-Alkylaryl oder C₇-C₂₅-Arylalkyl bedeuten, und wobei diese Reste auch mit Nitril oder C₁-C₅-Alkoxy derivatisiert sein können, und wobei auch eine oder mehrere nicht benachbarte CH₂-Gruppen durch NH oder O oder auch eine oder mehrere CH Gruppen durch N ersetzt sein können;
c) eine Metallchelat-Gruppierung;
d) ein thiophiler Rest;
e) ein chiraler Rest.

Thiophile Reste sind beispielsweise in EP 0 165 912 offenbart.

In einer bevorzugten Ausführungsform handelt es sich bei den Separationseffektoren um Anionentauscher.

Gegenstand der Erfindung ist weiterhin ein Verfahren zur Herstellung alkalistabiler Sorbenzien, dadurch gekennzeichnet, daß Sorbenzien mit reaktiven Gruppen der Formel I mit einer Verbindung der Formel II umgesetzt werden.

Gegenstand der Erfindung ist auch die Verwendung eines erfindungsgemäßen alkalistabilen Sorbens zur chromatographischen Auftrennung von Stoffgemischen, insbesondere Stoffgemischen, die Biopolymere enthalten.

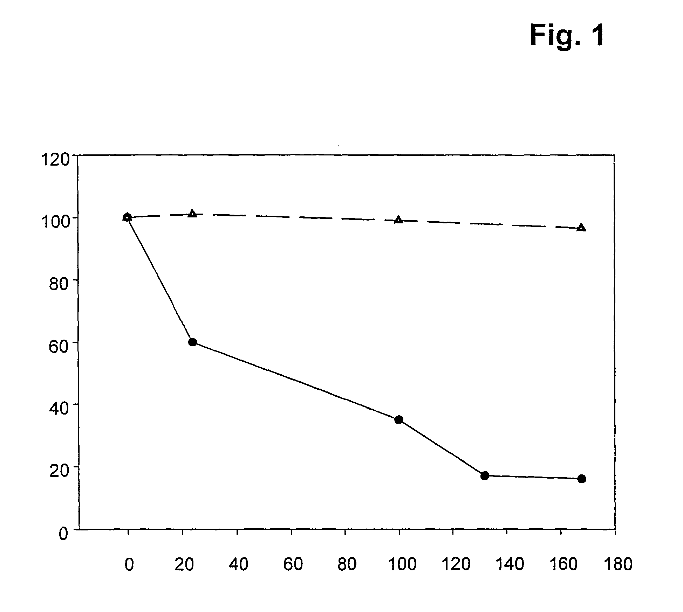

Abbildung 1 ist in Beispiel 2 näher erläutert.

Mit dem erfindungsgemäßen Verfahren lassen sich alle Sorbenzien stabilisieren, die reaktive Gruppen der Formel aufweisen. Diese Gruppen können bereits in einem Basispolymer vorhanden sein oder, bevorzugt, durch Beschichtung von Basispolymeren entstehen.

Als reaktive Gruppen werden erfindungsgemäß Gruppen bezeichnet, die sich am Ende einer Polymerkette befinden oder Gruppen, die sich in einem Polymer oder einer Polymerkette befinden und von außen, beispielsweise für entsprechende Derivatisierungsreagenzien, zugänglich sind. Im Gegensatz zu diesen reaktiven Gruppen befinden sich beispielsweise im Inneren eines Polymers Gruppen gleicher Funktionalität, die aufgrund ihrer Lage nicht für Reagenzien zugänglich sind. Diese Gruppen fallen erfindungsgemäß nicht unter den Begriff reaktive Gruppen.

Sorbenzien bestehen, wie dem Fachmann bekannt, aus organischen oder anorganischen polymeren Formkörpern. Unter Formkörpern werden erfindungsgemäß poröse und unporöse polymere Materialien, wie beispielsweise perlförmige Formkörper, Membranen, Schläuche, Hohlfasermembranen oder Schwämme verstanden.

Als Basispolymere können organische oder anorganische Polymere dienen, die entweder selbst reaktive Gruppen der Formel I aufweisen oder in die durch Aufpolymerisation oder sonstige Umsetzungen entsprechende Gruppen eingeführt werden können. Beispielsweise sind dies hydroxylgruppenhaltige Basispolymere, wie Polysaccharide auf Agarosebasis, Cellulosederivate, Polymere auf Dextranbasis. Bevorzugt sind Polymere auf Polyvinylalkohol-Basis oder Copolymere aus (Meth)acrylatderivaten und Comonomeren mit aliphatischen Hydroxylgruppen. Ein bevorzugtes Basispolymer, das kommerziell erhältlich ist, ist Fractogel^{®} TSK HW 65 (S) (Fa. Merck KGaA).

Diese Basispolymere können beispielsweise nach der in EP 0 565 978 beschriebenen mit Cer(IV) katalysierten Pfropfpolymerisation mit den erfindungsgemäß notwendigen Gruppen der Formel I versehen werden. Dabei werden (Meth)acrylsäurederivate, die eine Oxirangruppen tragen, kovalent an die Basispolymere gebunden. Es bildet sich eine Beschichtung aus Polymeren, die Gruppen der Formel I enthalten. Besonders bevorzugt erfolgt die Beschichtung durch Pfopfpolymerisation mit Glycidylmethacrylat.

Ebenso als Basispolymere für die vorliegende Erfindung geeignet sind andere Polymere, wie beispielsweise Polystyrole oder besonders Polyamide. Dem Fachmann sind geeignete Verfahren zur Beschichtung dieser Materialien mit Glycidylmethacrylat oder dessen Derivaten bekannt.

Eine geeignete Methode zur Beschichtung von Polyamiden wird beispielsweise in WO 96/22316 bzw. WO 97/49754 offenbart. Als Basispolymer geeignete Polyamide sind dem Fachmann bekannt und sind auch kommerziell erhältlich. Dazu gehören z.B. die unter dem Handelsnamen NYLON^{®} bekannten Polymere, z.B. NYLON^{®} 66 und NYLON^{®} 6. Poröse oder unporöse Formkörper bestehend aus derartigen Polyamiden sind ebenfalls bekannt und auch kommerziell erhältlich. Die Umsetzung derartiger Formkörper entsprechend WO 96/22316 bzw. WO 97/49754 ist bevorzugt, da unter den dort verwendeten Reaktionsbedingungungen (Reaktionstemperatur unter 60 °C), die Form der Formkörper erhalten bleibt, während andere Verfahren zur Derivatisierung von Polyamid in der Schmelze oder in Lösung ausgeführt werden.

Die üblicherweise verwendeten Polyamide, wie z.B. NYLON^{®} 66 oder NYLON^{®} 6 enthalten nur endständige freie Carboxyl- und/oder Aminogruppen. In diesem Fall entsteht bei der Polymerisation mit Monomeren auf das derivatisierte Basispolymer ein Blockpolymerisat. Falls das Basispolymer neben den endständigen freien Carboxyl- und/oder Aminogruppen noch seitenständige freie Carboxyl- und/oder Aminogruppen enthält, so entstehen zusätzlich seitenständige polymerisierbare Gruppen. Bei einer anschließenden Polymerisation findet dann zusätzlich zur Bildung des Blockpolymers eine Pfropfung statt.

Zur Darstellung der erfindungsgemäßen basenstabilen Materialien werden, wie z. B. in WO 96/22316 bzw. WO 97/49754 beschrieben, in einem ersten Reaktionsschritt ungesättigte Reste in das Polyamid eingeführt. Dazu wird ein ethylenisch ungesättigtes Derivatisierungsmittel, d.h. eine amino- oder carboxyreaktive Verbindung, die eine polymerisierbare Doppelbindung enthält, mit den Amino- beziehungsweise Carboxylgruppen des Polyamids zur Reaktion gebracht. Aminoreaktive Verbindungen sind grundsätzlich dem Fachmann in großer Zahl bekannt: Dazu gehören beispielsweise Oxiranderivate, Säureanhydride, Säureazide, Azlactonderivate. Besonders bevorzugt wird Glycidylmethacrylat verwendet.

In ähnlicher Weise können Reaktionsfolgen verwendet werden, die bei Peptidsynthesen Verwendung finden, beispielsweise Reaktionen mit wasserabspaltenden Mitteln (z.B. Carbodiimiden) oder die Verwendung von aktivierten Estern (z.B. p-Nitrophenylester). In analoger Weise ist es möglich, die freien Carboxylgruppen von Polyamiden zu derivatisieren, so daß diese ebenfalls als Ansatzpunkte für eine Polymerisation zur Verfügung stehen. Dazu können Verbindungen, die mit Carboxylgruppen reagieren können, und die polymerisierbare Doppelbindungen enthalten, z.B. Allylamin, verwendet werden.

Soweit das Basispolymer sowohl Carboxyl- als auch Aminogruppen enthält, ist es möglich, die Beladungsdichte zu erhöhen, indem vor der Umsetzung mit dem ethylenisch ungesättigten Derivatisierungsmittel eine Umsetzung mit einem bifunktionellen Derivatisierungsmittel erfolgt, d.h. mit einer Diaminoverbindung oder mit einer Dicarbonsäure oder einem Dicarbonsäureanhydrid.

Reaktionsfolgen für die genannten Umsetzungen sind dem Fachmann bekannt bzw. werden in WO 96/22316 und WO 97/49754 und der dort zitierten Literatur beschrieben.

An die eingeführten ungesättigten C=C-Gruppen können anschließend weitere Monomere nach allgemein bekannten Verfahren polymerisiert werden. Geeignete Monomere, die eine polymerisierbare Doppelbindung und einen Oxiranring aufweisen, werden in z.B. WO 96/22316 und WO 97/49754 und den dort zitierten Schriften offenbart. Besonders bevorzugt wird eine Blockpolymerisation mit Glycidylmethacrylat durchgeführt.

Ein Teil der Epoxidgruppen in den so hergestellten beschichteten Basispolymeren kann optional dann in einer polymeranalogen Reaktion weiter umgesetzt werden, wodurch Ionentauscher, thiophile Sorbentien oder Sorbentien für die Metallchelat- oder die hydrophobe Chromatographie, sowie auch für chirale Trennungen bereitgestellt werden. Es entstehen Gruppierungen entsprechend Formel III. Dabei werden beispielsweise Ammoniak, Diethylamin, Trimethylamin, Komplexbildner wie Iminodiessigsäure, oder chirale Verbindungen, oder auch z.B. Biotinderivate, an den Oxiranring addiert. Diese Verbindungen werden erfindungsgemäß Separationseffektoren genannt. Beispiele für derartige polymeranaloge Umsetzungen sind in WO 96/22316 und WO 97/49754, und den dort zitierten Schriften offenbart.

Besonders bevorzugt werden die erfindungsgemäßen stabilisierten Formkörper als Anionentauscher eingesetzt. Auch ohne die zusätzliche, vorgeschaltete Einführung ionischer Gruppen als Separationseffektoren entstehen bei der erfindungsgemäßen Stabilisierung selbst ionische Gruppen. Daher können die bevorzugten Anionentauscher sowohl durch Umsetzung eines Teils der Epoxidgruppen mit Aminen und anschließender erfindungsgemäßer Stabilisierung oder aber direkt durch die Umsetzung mit einer Verbindung entsprechend Formel II erzeugt werden.

Die erfindungsgemäße Stabilisierung der Formkörper, die reaktive Gruppen entsprechend Formel I enthalten, erfolgt durch Umsetzung mit einer Verbindung entsprechend Formel II. Typischerweise wird der Formkörper dazu mit einer wässrigen 0,5 bis 5 M Lösung der entsprechenden Verbindung versetzt und bei 20 bis 60°C über 1 bis 6 Stunden umgepumpt. Besonders bevorzugt ist eine Umsetzung mit Verbindungen der Formel II, in denen m gleich 1 oder 2 ist. Längerkettige Verbindungen erhöhen den hydrophoben Charakter des Formkörpers und sind daher nur im Ausnahmefall für die Aufreinigung von Biopolymeren wie z.B. Proteinen geeignet.

Durch diesen abschließenden Stabilisierungsschritt werden die im allgemeinen basenlabilen Polymere oder aufpolymerisierten Schichten aus Acrylat-Derivaten wesentlich stabiler gegenüber einer Alkalibehandlung. Somit wird ein wesentlicher Nachteil der durch Block- oder Pfopfpolymerisation mit Acrylatestern hergestellten Sorbentien, die sich ansonsten durch sehr gute Bindungskapazitäten auszeichnen, behoben. Sorbenzien aus unterschiedlichen Basispolymeren und mit unterschiedlichen Separationseffektoren können wesentlich stabilisiert werden und so vor allem der Biochromatographie zugänglich gemacht werden.

Die vollständige Offenbarung aller vor- und nachstehend aufgeführten Anmeldungen, Patente und Veröffentlichungen, insbesondere der korrespondierenden Anmeldung DE 100 04 565, eingereicht am 02.02.2000, ist durch Bezugnahme in diese Anmeldung eingeführt.

### Beispiele

Im folgenden wird unter Raumtemperatur eine Temperatur zwischen 15 und 30 °C verstanden.

### 1) Herstellung eines alkalistabilen schwach basischen lonenaustauschers

### a) Einführung von C=C-Bindungen in ein Polyamid

Zur Durchführung der Synthese wird ein Polyamidfaserbündel aus NYLON^{®} (Faserbündel aus 64 Fasern, 32 cm lang, etwa 200 µm innerer Durchmesser, etwa 2 mm äußerer Durchmesser, mittlerer Porendurchmesser 1-2 µm, Oberfläche 97 cm²) auf 30 cm gekürzt und in eine 300-10 mm Chromatographiesäule SUPERFORMANCE^{®} (Fa. Merck KGaA) gepackt. An diese Säule wird eine inerte Pumpe angeschlossen. Für die Umsetzung werden 10 g Glycidylmethacrylat in einer Mischung aus 40 ml Dioxan und 160 ml Wasser gelöst und anschließend 17,5 g NaOH-Lösung (32 Gew.-%) zugefügt. Diese Lösung wird anschließend in der Apparatur umgepumpt (Flußgeschwindigkeit 3 ml/min.; eine Stunde bei 50 C). Anschließend wird die derivatisierte Hohlfasermembran mit 100 ml Wasser, 200 ml Aceton und 100 ml Toluol gespült.

### b) Blockpolymerisation mit Glycidylmethacrylat

Die derivatisierte und gespülte Hohlfasermembran wird in der unter a) beschriebenen Apparatur mit einer Lösung von 15 g Glycidylmethacrylat und 1 g Azoisobutyronitril (Polymerisationsinitiator) in 200 ml Toluol bei 100 °C eine Stunde umgepumpt (7 ml/min). Die derivatisierte Hohlfasermembran wird anschließend mit Toluol und Aceton gespült.

### c) Modifizierung und Stabilisierung der Membran

Die derivatisierte Membran wird in der unter a) beschriebenen Apparatur zunächst mit Wasser gespült. Anschließend werden 200 ml einer wäßrige Diethylaminlösung (50 Volumen-%) 6 Stunden bei Raumtemperatur durch die Apparatur gepumpt. Es wird mit Wasser gewaschen und danach 3 Stunden mit 1 M Ethanolaminlösung bei 40°C im Kreislauf gefahren. Dann wird 0,5 M Natriumphosphatpuffer (pH 7) gewaschen bis das Eluat neutral ist.

### 2) Untersuchung der Alkalistabilität

### a) Vergleich mit Fractogel^{®} EMD DEAE

Zur Untersuchung der Alkalistabilität wurde die Proteinbindungskapazität eines erfindungsgemäßen, nach Beispiel 1) hergestellten Ionentauschers mit der von Fractogel^{®} EMD DEAE nach Lagerung in Alkali bestimmt.

### Fractogel^{®} EMD DEAE:

Das Gel wird mit Wasser bis zur Neutralität gespült und anschließend bei Raumtemperatur mit 1 M NaOH gelagert. Nach der Lagerung wird die Probe mit 1 M Phosphatpuffer und Wasser gewaschen und im Trockenschrank bis zur Gewichtskonstanz getrocknet. 100 ml trockenes Gel werden in 20 ml einer Mischung aus Rinderserumalbumin- (5 mg/ml) und 50 mM Tris-HCl Puffer suspendiert und geschüttelt. Der Gehalt an Protein im Überstand wird photometrisch bestimmt.

### Modifiziertes Polyamid :

Zur Kapazitätsbestimmung wurde die modifizierte Polyamidhohlfaser in ein dead-end Modul eingebaut. Das Modul enthält 64 Fäden und hat eine Länge von 80 mm und einen Durchmesser von 6 mm. Alle Lösungen können mit einer Spritze aufgegeben werden. Durch Spülen mit einer Lösung aus 20% Ethanol/150 mM Kochsalz wird Luft entfernt. Anschließend wird mit 100 ml einer 50 mM Tris-HCl Lösung, pH 8, gespült und 15 ml einer Lösung aus 10 mg/ml Rinderserumalbumin in 50 mM Tris-HCl Puffer, pH 8, aufgegeben. Es wird mit 50 ml einer in 50 mM Tris-HCl Lösung, pH 8, gespült. Die Proteinelution erfolgt mit 20 ml einer Lösung aus 1 M NaCl in 50 mM Tris-HCl, pH 8. Diese Lösung wird photometrisch vermessen.

Das Ergebnis der Stabilitätsuntersuchung ist in Abbildung 1 dargestellt. Auf der Abszisse ist die Zeit in Stunden angegeben, auf der Ordinate die Abnahme der Proteinbindungskapazität (Rinderserumalbumin) in %. Die Dreiecke zeigen den Stabilitätsverlauf des erfindungsgemäß stabilisierten Polyamids an, die Kreise den des Fractogel^{®} EMD DEAE.

Es zeigt sich, daß die Bindungskapazität des Fractogel^{®} EMD DEAE bei der Lagerung in 1 M NaOH stark abnimmt, wohingegen die Bindungskapazität des erfindungsgemäß stabilisierten beschichteten Polyamids konstant bleibt.

### b) Vergleich der Alkalistabilität von erfindungsgemäß stabilisierten und nicht stabilisierten beschichteten Polyamiden.

Beide Module werden nach den in Beispiel 1 aufgeführten Reaktionsschritten a) und b) modifiziert. Während das erfindungsgemäß stabilisierte Modul (Modul A) nach Beispiel 1), Schritt c), weiterbehandelt wird, wird das nach dem Stand der Technik gefertigte, nicht stabilisierte Modul (Modul B) wie folgt umgesetzt:

Das in Schritt b) erhaltene Blockpolymerisat wird in der unter Beispiel 1), Schritt a), beschriebenen Apparatur zunächst mit Wasser gespült. Anschließend werden 200 ml einer wäßrige Diethylaminlösung (50 Volumen-%) 6 Stunden bei Raumtemperatur durch die Apparatur gepumpt. Dann wird 0,5 M Natriumphosphatpuffer (pH 7) gewaschen bis das Eluat neutral ist.

Beide Module werden 1 Woche bei 40°C in 6 M Natronlauge gelagert. Anschließend wird ihre Proteinbindungskapazität (Rinderserumalbumin in mg/Modul) bestimmt. Die in der Tabelle aufgeführten Ergebnisse zeigen, daß die erfindungsgemäß stabilisierten Polyamide auch nach einer Woche Alkalibehandlung noch eine nahezu unveränderte Bindungskapazität aufweisen.

| | Startkapazität [mg/Modul] | Kapazität nach Lagerung [mg/Modul] |
|---|---|---|
| Modul A | 41 | 39,6 |
| Modul B | 32,7 | 5,4 |

## Patentansprüche

1. Alkalistabiles Sorbens herstellbar aus einem Formkörper, der reaktive Gruppen der Formel I aufweist, durch Umsetzung mit einer Verbindung der Formel II, 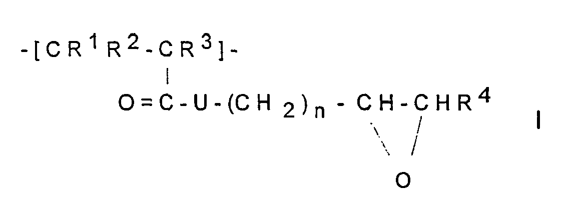 wobei in Formel I
R¹, R² und R³ unabhängig voneinander H oder CH₃,
R⁴ H, Alkyl mit 1-5 C-Atomen oder Aryl mit 6-12 C-Atomen,
U -O- oder -NH-
und
n eine ganze Zahl zwischen 1 und 5,
A-(CH₂)ₘ-B II
in Formel II
A NHR⁵,
B H, OH, SH oder NHR⁵ mit
R⁵ H, Alkyl mit 1-5 C-Atomen
und
m eine ganze Zahl zwischen 1 und 6 bedeuten.

2. Alkalistabiles Sorbens nach Anspruch 1, **dadurch gekennzeichnet, daß** das Polymer reaktive Gruppen der Formel I aufweist, in denen
R¹ und R² H,
R³ CH₃,
R⁴ H,
U -O-
und
n 1
bedeuten.

3. Alkalistabiles Sorbens nach einem der Ansprüche 1 oder 2, **dadurch gekennzeichnet, daß** Ethanolamin als Verbindung der Formel II verwendet wird.

4. Alkalistabiles Sorbens nach einem der Ansprüche 1 bis 3, **dadurch gekennzeichnet, daß** der Formkörper aus einem Basispolymer aus Polyamid, Polyvinylalkohol oder Copolymeren aus (Meth)acrylatderivaten und Comonomeren mit aliphatischen Hydroxylgruppen besteht.

5. Alkalistabiles Sorbens nach einem der Ansprüche 1 bis 4, **dadurch gekennzeichnet, daß** der Formkörper zusätzlich Gruppen der Formel III aufweist, die Separationseffektoren tragen, 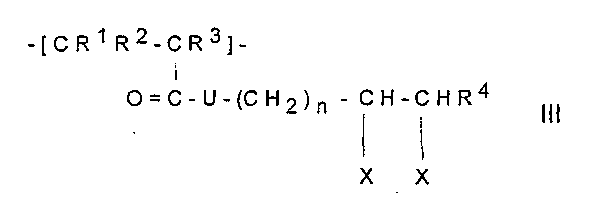 wobei in Formel III
R¹,R² und R³ unabhängig voneinander
H oder CH₃,
R⁴ H, Alkyl mit 1-5 C-Atomen oder Aryl mit 6-12 C-Atomen,
U -O- oder -NH-
n eine ganzen Zahl zwischen 1 und 5,
ein Rest X einen Separationseffektor, sowie der andere Rest X OH bedeuten.

6. Verfahren zur Herstellung alkalistabiler Sorbenzien entsprechend einem der Ansprüche 1 bis 5, **dadurch gekennzeichnet, daß** Formkörper mit reaktiven Gruppen der Formel I mit einer Verbindung der Formel II umgesetzt werden.

7. Verwendung eines alkalistabilen Sorbens entsprechend einem der Ansprüche 1 bis 5 zur chromatographischen Auftrennung von Stoffgemischen.

## Claims

1. Alkali-stable sorbent which can be prepared from a moulding which contains reactive groups of the formula I by reaction with a compound of the formula II 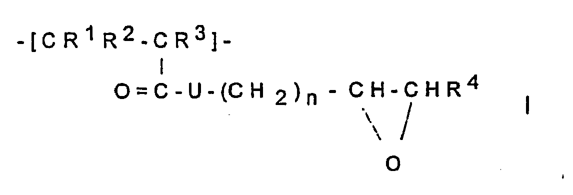 where, in formula I,
R¹, R² and R³, independently of one another, denote H or CH₃,
R⁴ denotes H, alkyl having 1-5 C atoms or aryl having 6-12 C atoms,
U denotes -O- or -NH-
and
n denotes an integer between 1 and 5,
A-(CH₂)ₘ-B II
in formula II,
A denotes NHR⁵,
B denotes H, OH, SH or NHR⁵, where
R⁵ denotes H, alkyl having 1-5 C atoms,
and
m denotes an integer between 1 and 6.

2. Alkali-stable sorbent according to Claim 1, **characterised in that** the polymer contains reactive groups of the formula I in which
R¹ and R² denote H,
R³ denotes CH₃,
R⁴ denotes H,
U denotes -O-
and
n denotes 1.

3. Alkali-stable sorbent according to one of Claims 1 or 2, **characterised in that** ethanolamine is used as compound of the formula II.

4. Alkali-stable sorbent according to one of Claims 1 to 3, **characterised in that** the moulding consists of a base polymer of polyamide, polyvinyl alcohol or copolymers of (meth)acrylate derivatives and comonomers containing aliphatic hydroxyl groups.

5. Alkali-stable sorbent according to one of Claims 1 to 4, **characterised in that** the moulding additionally contains groups of the formula III which carry separation effectors, 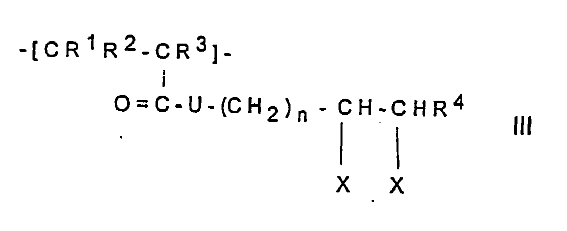 where, in formula III,
R¹, R² and R³, independently of one another, denote
H or CH₃,
R⁴ denotes H, alkyl having 1-5 C atoms or aryl having 6-12 C atoms,
U denotes -O- or -NH-,
n denotes an integer between 1 and 5,
one radical X denotes a separation effector and the other radical X denotes OH.

6. Process for the preparation of alkali-stable sorbents corresponding to one of Claims 1 to 5, **characterised in that** mouldings containing reactive groups of the formula I are reacted with a compound of the formula II.

7. Use of an alkali-stable sorbent corresponding to one of Claims 1 to 5 for the chromatographic separation of substance mixtures.

## Revendications

1. Sorbant stable aux alcalis qui peut être préparé à partir d'un moulage qui contient des groupes réactifs de la formule I par réaction avec un composé de la formule II 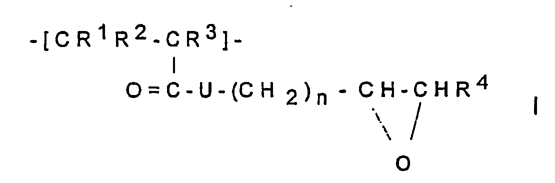 où, dans la formule I,
R¹, R² et R³, indépendamment les uns des autres, représentent H ou CH₃,
R⁴ représente H, alkyle comportant de 1 à 5 atomes de C ou aryle comportant de 6 à 12 atomes de C,
U représente -O- ou -NH-
et
n représente un entier entre 1 et 5,
A-(CH₂)ₘ-B II
dans la formule II,
A représente NHR⁵,
B représente H, OH, SH ou NHR⁵, où
R⁵ représente H, alkyle comportant de 1 à 5 atomes de C,
et
m représente un entier entre 1 et 6.

2. Sorbant stable aux alcalis selon la revendication 1, **caractérisé en ce que** le polymère contient des groupes réactifs de la formule I dans laquelle
R¹ et R² représentent H,
R³ représente CH₃,
R⁴ représente H,
U représente -O-
et
n représente 1.

3. Sorbant stable aux alcalis selon l'une des revendications 1 ou 2, **caractérisé en ce que** de l'éthanolamine est utilisé en tant que composé de la formule II.

4. Sorbant stable aux alcalis selon l'une des revendications 1 à 3, **caractérisé en ce que** le moulage est constitué par un polymère de base en polyamide, de l'alcool polyvinylique ou des copolymères de dérivés de (méth)-acrylate et des comonomères contenant des groupes hydroxyle aliphatiques.

5. Sorbant stable aux alcalis selon l'une des revendications 1 à 4, **caractérisé en ce que** le moulage contient additionnellement des groups de la formule III qui sont porteurs d'effecteurs de séparation, 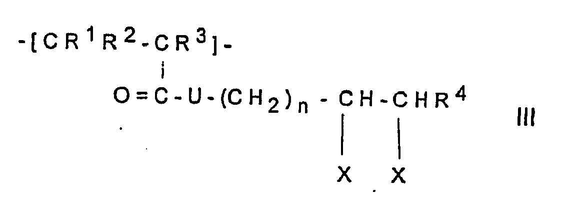 où, dans la formule III,
R¹, R² et R³, indépendamment les uns des autres, représentent H ou CH₃,
R⁴ représente H, alkyle comportant de 1 à 5 atomes de C ou aryle comportant de 6 à 12 atomes de C,
U représente -O- ou -NH-,
n représente un entier entre 1 et 5,
un radical X représente un effecteur de séparation et l'autre radical X représente OH.

6. Procédé pour la préparation de sorbants stables aux alcalis correspondant à l'une des revendications 1 à 5, **caractérisé en ce que** des moulages contenant des groupes réactifs de la formule I sont amenés à réagir avec un composé de la formule II.

7. Utilisation d'un sorbant stable aux alkalis correspondant à l'une des revendications 1 à 5 pour la séparation chromatographique de mélanges de substances.
